# EUROPÄISCHE PATENTSCHRIFT

(11) **EP 0 615 873 B1**
(45) Veröffentlichungstag und Bekanntmachung des Hinweises auf die Patenterteilung: **13.10.1999**
(21) Anmeldenummer: 94103801.0
(22) Anmeldetag: 11.03.1994
(51) Int. Cl.: B60J 10/12

(54) **Dichtungsanordnung**
Sealing arrangement
Disposition d'étanchéité

(30) Priorität: 15.03.1993 DE 4308218
(43) Veröffentlichungstag der Anmeldung: 21.09.1994
(73) Patentinhaber: METZELER Automotive Profiles GmbH, D-88131 Lindau (DE)
(72) Erfinder: Glagow, Klaus, D-88142 Wasserburg (DE); Brocke, Rolf, D-88239 Wangen (DE)
(74) Vertreter: Preissner, Nicolaus, Dipl.-Ing.

(56) Entgegenhaltungen:
- DE-A- 3 639 894
- US-A- 4 757 643
- US-A- 5 170 587

## Beschreibung

Die Erfindung bezieht sich auf eine Dichtungsanordnung für den Spalt zwischen dem starren Deckel eines Fahrzeugdachs und der Dachöffnung, bei der der Deckel aus einer Glasplatte mit einem im Randbereich untergelegten und seitlich überstehenden Grundrahmen mit einem hochgebogenen Rand verklebt ist und zwischen Glasplattenumfang und Dachöffnung eine Spaltdichtung mit einem U-förmigen Klemmbereich aus Elastomer auf dem überstehenden Rand aufgeklemmt ist, wobei die Spaltdichtung einen den Rand der Glasplatte übergreifenden lippenförmigen Ansatz und ein auf der anderen Seite anextrudiertes Hohlkammerprofil aus Moosgummi aufweist.

Eine derartige Dichtungsanordnung ist aus den US-A-5 170 587 bekannt. Die Spaltdichtung weist neben dem an der Oberseite der Glasplatte vorgesehenen lippenförmigen Ansatz einen Stützbereich auf, der die Glasplatte untergreift, so daß eine Nut für die Glasplatte bereitgestellt wird. Zur Befestigung der Spaltdichtung wird diese Nut mit einem geeigneten Klebemittel gefüllt. Danach werden die Spaltdichtung auf die Glasplatte aufgeklebt und die beiden Enden der Spaltdichtung miteinander verbunden. Im Anschluß wird der hochgebogene Rand des Grundrahmens in den U-förmigen Klemmbereich der Spaltdichtung eingeführt. Der Grundrahmen wird an der Glasplatte mittels eines weiteren Klebemittels fixiert. Es ist nicht möglich, die Enden der Spaltdichtung vor der Montage an der Glasplatte miteinander zu verbinden. Daher müssen die Spaltdichtung und der Grundrahmen einzeln und nacheinander an der Glasplatte montiert werden.

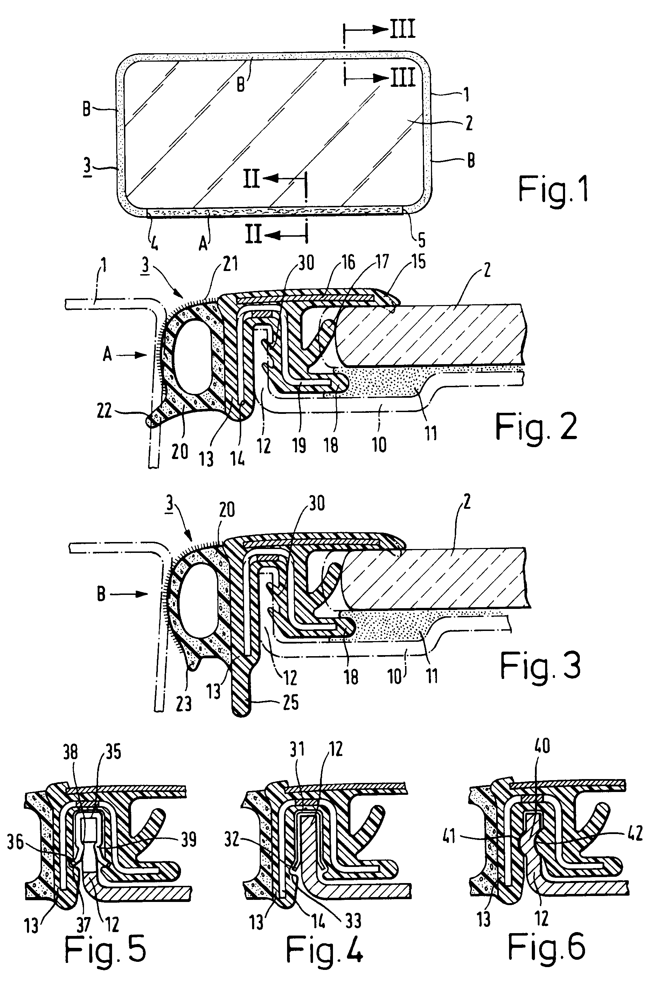

Ein weiterer Deckel ist aus der Offenlegungsschrift DE-A-3 639 894 bekannt. Dabei besteht dieser Deckel aus einer Vielzahl von Einzelteilen, die bei der Endmontage zusammengefügt werden müssen. Hierbei ist die lichtdurchlässige Deckelplatte des Deckels mit einem im Randbereich untergelegten und seitlich überstehenden Grundrahmen verklebt. Dieser Grundrahmen weist einen hochgebogenen Rand auf, auf den eine Spaltdichtung aus Elastomer mit einem U-förmigen Klemmbereich aufgeklemmt ist, welcher (s. insbesondere Fig. 3) mit einer Armierung versehen ist. Zwischen der Glasplatte und der eigentlichen Dichtung ist noch ein umlaufendes T-förmiges Aluprofil aufgelegt, das zusätzlich gegen den überstehenden Rand des Grundrahmens verankert werden muß. Insgesamt sind mehrere Arbeitsgänge und Hilfsmittel erforderlich, um einen fertigen Deckel zu schaffen.

Der vorliegenden Erfindung liegt demgegenüber die Aufgabe zugrunde, eine Dichtungsanordnung für einen solchen Deckel zu schaffen, mit der ein solcher Deckel einfacher hergestellt und insbesondere aus weniger Einzelteilen montiert werden kann, ohne daß hierdurch die Dichtigkeit beeinträchtigt wird.

Zur Lösung dieser Aufgabe ist erfindungsgemäß vorgesehen, daß die Spaltdichtung mit einer gegen den umlaufenden Rand der Glasplatte gerichteten Dichtlippe und einer Armierung in dem Klemmbereich versehen ist.

Damit ist es möglich, die gesamte Spaltdichtung als einstückiges Bauteil und als geschlossenen Rahmen herzustellen, der dann nur noch von oben auf den Rand des Grundrahmens aufgeschoben werden muß.

Dabei kann die die Glasplatte und den Grundrahmen geschlossen umziehende Spaltdichtung aus einem sich über die Vorderkante des Deckels erstreckenden Profilabschnitt A mit einer seitlich vom Moosgummiprofil zur Dachöffnung abragenden Dichtlippe und einen sich über die übrigen Umfangsbereiche des Deckels erstreckenden Profilabschnitt B mit einem vom an das Moosgummiprofil angrenzenden Schenkel des U-förmigen Klemmbereiches senkrecht abragenden Dichtsteg bestehen, wobei die beiden Profilabschnitte an ihren Stoßstellen zu einem einstückigen Rahmen dauerhaft verbunden sind.

Zweckmäßigerweise besteht der Elastomerteil der Spaltdichtung aus EPDM mit einer Shore-A-Härte von etwa 70.

Die Armierung des U-förmigen Klemmbereiches kann aus einem einvulkanisierten Stanzband mit randseitigen Einschnitten bestehen.

Darüberhinaus ist es zweckmäßig, wenn der lippenförmige Ansatz eine sich bis oberhalb der U-förmigen Armierung erstreckende Versteifung in Form eines Aluminiumbandes oder Stanzbandes aufweist. Zur weiteren Halterung ist es ferner zweckmäßig, wenn der U-förmige Klemmbereich an seinem glasplattenseitigen Schenkel einen horizontalen, zur Glasplatte hin gerichteten Ansatz aufweist, in den sich ein abgewinkeltes Ende der Armierung erstreckt.

Dabei können Glasplatte und Grundrahmen mittels einer Kleberschicht derart verbunden sein, daß auch das freie Ende des Ansatzes mit in die Kleberschicht eingebettet ist.

Ferner ist es zweckmäßig, wenn die gegen den Rand der Glasplatte gerichtete Dichtlippe als dreieckförmige Dichthohlkammer mit einer Eindrückkerbe im horizontalen Schenkel ausgebildet ist.

Zur Befestigung des U-förmigen Klemmbereiches auf dem hochgebogenen Rand gibt es verschiedene Möglichkeiten.

So kann der U-förmige Klemmbereich auf seiner Innenseite mehrere, schräg abragende Klemmlippen aufweisen.

Des weiteren ist es möglich, zur Arretierung dieses U-förmigen Klemmbereiches auf den hochgebogenen Rand des Grundrahmens U-förmige Klammern mit nach außen abgebogenen Schenkelenden vorzusehen, welche Schenkelenden in entsprechende Ausnehmungen des U-förmigen Klemmbereiches ragen.

Eine weitere Möglichkeit besteht darin, daß der hochgebogene Rand eine seitliche Auswölbung aufweist, der auf der einen Seite in eine entsprechende Ausnehmung des einen U-Schenkels eingreift und wobei der andere U-Schenkel mit einer gleichartigen Auswölbung versehen ist, die in die durch die Auswölbung entstehende rückseitige Ausnehmung des Randes eingreift.

Eine weitere sehr vorteilhafte Befestigungsmethode besteht darin, daß der U-förmige Klemmbereich mittels eines aktivierbaren Klebers mit dem hochgebogenen Rand verbunden ist.

Eine solche aktivierbare Kleberschicht weist zweckmäßigerweise eine innenliegende, stromdurchflossene Kupferlitze zur Erwärmung und Aktivierung des Klebers auf.

Dabei ist die aktvierbare Klebermasse zweckmäßigerweise auf einer Innenseite des U-förmigen Klemmbereiches aufgebracht, insbesondere aufextrudiert und nach Aufschieben des Klemmbereiches auf den hochgebogenen Rand angepreßt und aktiviert.

Anhand einer schematischen Zeichnung sind Aufbau und Funktionsweise von Ausführungsbeispielen nach der Erfindung näher erläutert. Dabei zeigen:
- Fig. 1: eine Aufsicht auf den Deckel innerhalb der Dachöffnung,
- Fig. 2: einen Längsschnitt durch den Randbereich des Deckels an der Vorderkante mit einer aufgesetzten Dichtung entsprechend der Schnittlinie II-II nach Fig. 1,
- Fig. 3: eine gleichartige Dichtung wie Fig. 2 für die übrigen, umlaufenden Bereiche des Deckels entsprechend der Schnittlinie III-III nach Fig. 1,
- Fig. 4: die Ausbildung einer Klemmanordnung zur Halterung der Spaltdichtung,
- Fig. 5: eine weitere Ausgestaltung einer solchen Klemmanordnung,
- Fig. 6: eine dritte Variante für eine derartige Klemmanordnung,
- Fig. 7: einen Querschnitt durch eine fertige Spaltdichtung mit aktivierbarem Kleber,
- Fig. 8: einen Längsschnitt durch den Randbereich des Deckels an der Vorderkante mit einer Dichtung entsprechend Fig. 7 und
- Fig. 9: eine solche Spaltdichtung für die übrigen, umlaufenden Bereiche des Deckels.

Nach der in Fig. 1 dargestellten Aufsicht auf ein Fahrzeugdach mit einer rechteckigen Dachöffnung 1 ist der im wesentlichen aus einer Glasplatte 2 bestehende Deckel allseitig von einer Spaltdichtung 3 zur Dachöffnung 1 hin umschlossen. Die Spaltdichtung 3 besteht dabei aus zwei unterschiedlichen Profilabschnitten, nämlich dem Profilabschnitt A an der zu öffnenden Vorderkante des Deckels und dem Profilabschnitt B, der die übrigen Bereiche des Deckels 2 umschließt. Dabei weist der Profilabschnitt A zum Profilabschnitt B zwei Stoßstellen 4 und 5 auf, an denen die Profilabschnitte A und B miteinander zu einem geschlossenen Rahmen verklebt sind.

In Fig. 2 ist ein Längsschnitt durch den Randbereich des Deckels entsprechend der Schnittlinie II-II nach Fig. 1 gezeigt. Danach ist zunächst die Glasplatte 2 mit einem untergelegten und im Randbereich seitlich überstehenden Grundrahmen 10 über einen zwischengefügten Kleber 11 zu einer Baueinheit verbunden.

Der Grundrahmen 10 weist am Außenumfang einen hochgebogenen Rand 12 auf, auf den die Spaltdichtung 3 des Profilbereiches A aufgeschoben ist, wobei diese Spaltdichtung 3 im einzelnen wie folgt aufgebaut ist.

Die Dichtung weist zunächst einen U-förmigen Klemmbereich 13 aus einem Elastomer auf, wobei dieses Elastomer z.B. aus EPDM mit einer Shore-A-Härte von etwa 70 bestehen kann. Dieser Klemmbereich 13 ist mit einer ebenfalls U-förmigen Armierung 14 in Form eines einvulkanisierten Stanzbandes mit randseitigen Einschnitten versehen. Von der Oberseite dieses Klemmbereiches 13 ragt zur Glasplatte 2 hin ein lippenförmiger Ansatz 15 ab, der den Rand der Glasplatte 2 überdeckt und ebenfalls mit einer Versteifung 16 in Form eines Aluminiumbandes oder Stanzbandes versehen ist, wobei sich diese Versteifung 16 bis über die Armierung 14 des Klemmbereiches 13 erstreckt. Ferner ist eine vom Klemmbereich 13 zum umlaufenden Rand der Glasplatte 2 abragende Dichtlippe 17 vorgesehen, die im wesentlichen auch einen Toleranzausgleich zur Glasplatte 2 bewirkt. Ferner geht vom unteren Ende des glasplattenseitigen Schenkels des Klemmbereiches 13 ein zur Glasplatte 2 hin gerichteter Ansatz 18 aus, in den sich ein abgewinkeltes Ende 19 der Armierung 14 erstreckt.

Auf der gegenüberliegenden Seite des Klemmbereiches 13 zum Dachausschnitt 1 hin ist an den Klemmbereich 13 ein Hohlkammerprofil 20 aus Moosgummi anextrudiert, das auf seiner Ober- und Vorderseite mit einer Beflockung 21 zur Abdichtung und besseren Gleitung gegenüber dem Dachausschnitt 1 versehen ist.

Fig. 3 zeigt einen Längsschnitt durch die Profilbereiche B auf den übrigen Seiten der Glasplatte 2. Hierbei unterscheidet sich die Dichtung 3 von dem in Fig. 2 gezeigten Profilbereich A nur dadurch, daß der außenliegende Schenkel des Klemmbereiches 13 einen senkrecht abragenden Dichtsteg 25 sowie einer ebenfalls nach unten ragenden Dichtlippe 23 vom Moosgummibereich 20, die der nach vorn zum Dachausschnitt 1 ragenden Dichtlippe 22 nach Fig. 2 entspricht.

Zur Montage werden nun die beiden Profilabschnitte A und B an ihren Stoßstellen 4 und 5 miteinander verklebt und als somit geschlosssener Rahmen auf den hochstehenden Rand 12 des Grundrahmens 10 aufgeschoben. Zur besseren Verankerung wird der Kleber 11 erwärmt, so daß die abragenden Ansätze 18 des Klemmbereiches 13 mit in den Kleber 11 eingebettet und damit zusätzlich verankert sind.

Zur besseren Verankerung der aufgeklemmten Spaltdichtung 3 können verschiedene Möglichkeiten vorgesehen sein. Nach Fig. 3 weist der U-förmige Klemmbereich 13 auf seiner Innenseite mehrere schräg abragende Klemmlippen 30 auf, die entgegen der Abzugsrichtung vom Rand 12 gerichtet sind und damit ein Herausziehen des Profils verhindern.

Weitere Klemmöglichkeiten sind in den Fig. 4 bis 6 gezeigt. Nach Fig. 4 ist auf den hochgebogenen Rand 12 eine U-förmige Klammer 31 aufgesetzt, die nach außen abgeknickte Enden 32 aufweist, die in entsprechende Ausnehmungen 33 auf der Innenseite des U-förmigen Klemmbereiches 13 hineinragen. Die Klammern 31 können dabei mit dem Rand 12 fest verbunden sind, so daß damit eine feste Arretierung der Spaltdichtung möglich ist.

Nach Fig. 5 ist eine etwas anders gestaltete Klammer 35 auf den hochgebogenen Rand 12 aufgeschoben. Hierbei weist die Klammer 35 ebenfalls nach außen ragende Enden 36 auf, die in entsprechende Ausnehmungen 37 des U-förmigen Klemmbereiches 13 hineinragen. Zusätzlich weist der hochgebogene Rand aber noch Einziehungen 38 auf, in den entsprechend eingezogene Bereiche 39 der Klammer 35 einrasten. Auch hiermit ist eine sichere Verankerung gewährleistet.

Eine weitere Möglichkeit ist in Fig. 6 dargestellt. Danach weist der hochgebogene Rand 12 eine seitliche Auswölbung 40 auf, wobei die ausgewölbte Seite in eine entsprechende Ausnehmung 41 auf dem einen U-Schenkel des Klemmbereiches 13 eingreift, während der andere U-Schenkel eine gleichartige Auswölbung 42 besitzt, die in die entsprechende Vertiefung der Auswölbung 40 eingreift. Auch hiermit ist eine sichere Arretierung der Spaltdichtung gewährleistet.

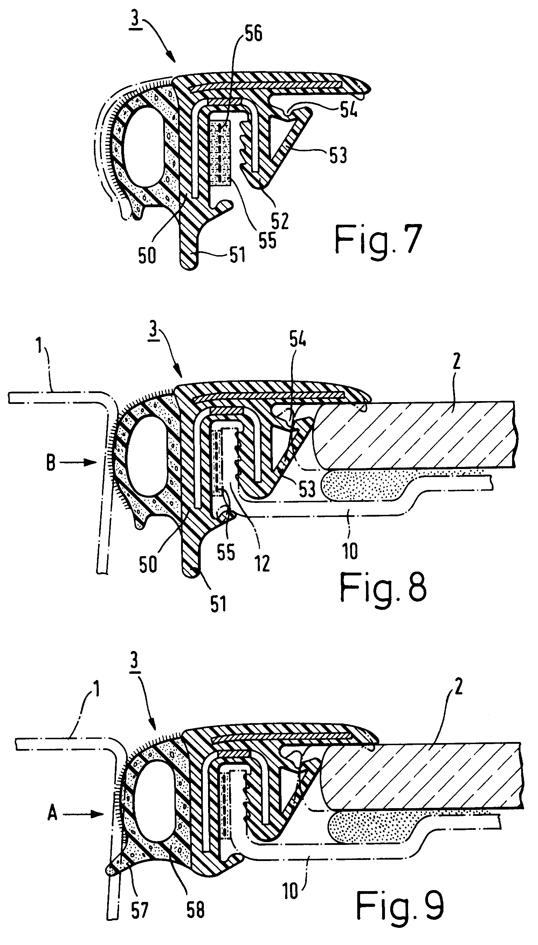

Eine etwas anders gestaltete und befestigte Spaltdichtung 3 ist in den Fig. 7 bis 9 dargestellt. Fig. 7 zeigt einen Querschnitt durch diese Spaltdichtung für den Profilbereich B. Danach ist auch hier ein U-förmiger Klemmbereich 50 mit einem nach unten ragenden Ansatz 51 an einem Schenkel des Klemmbereiches vorgesehen. Der andere Schenkel 52 weist dagegen eine dreieckförmige Dichthohlkammer 53 auf, in dessem horizontalen Schenkel eine Eindrückkerbe 54 vorgesehen ist.

Wie man aus dem entsprechenden Längsschnitt entsprechend Fig. 8 für den Einbauzustand ersieht, dichtet diese dreieckförmige Dichthohlkammer 53 gegen die umlaufende Kante der Glasplatte 2 ab und bietet hier durch die Eindrückkerbe 54 einen Toleranzausgleich für Spaltdichtung und Glasscheibe 2.

Zusätzlich ist auf der Innenseite des außenliegenden Schenkels des U-förmigen Klemmbereiches 50 ein aktivierbarer Kleber 55 aufgebracht bzw. aufextrudiert. Ein solcher aktivierbarer Kleber 55 besteht beispielsweise aus einem PU-Granulat, in dessem Inneren beispielsweise eine an eine Stromquelle angeschlossene Kupferlitze 56 eingebettet ist. Bei einem Stromdurchfluß und damit Erwärmung der Kupferlitze 54 wird auch der umgebende Kleber heiß und damit aktiviert, so daß dann nach Abschalten der Stromquelle und Erkalten der Klebermasse eine feste Verbindung zum anliegenden Bauteil gewährleistet ist.

Wie man dazu aus Fig. 8 ersieht, ist der aktivierbare Kleber 55 nach Aufschieben der Spaltdichtung 3 auf den hochgebogenen Rand 12 des Rahmens 10 zunächst etwas zusammengepreßt und bildet nach seiner Aktivierung eine feste Verbindung zwischen dem U-förmigen Klemmbereich 50 und dem hochgebogenen Rand 12 des Rahmens 10.

Fig. 9 zeigt einen Längsschnitt durch diese Spaltdichtung 3 im Bereich des Profilabschnittes A an der Vorderkante der Dachöffnung, wobei sich hier das Profil gegenüber dem Profilbereich B nur dadurch unterscheidet, daß der senkrechte Ansatz 51 nach Fig. 8 fehlt und vom Moosgummibereich 56 eine schräg nach unten abragende Dichtlippe 57 zum Dachauschnitt 1 vorgesehen ist.

Insgesamt ergibt sich somit eine Spaltdichtung für den Spalt zwischen Glasdeckel und umlaufendem Dachausschnitt, die als fertiger, rechteckiger Profilrahmen vorgefertigt und dann einstückig auf den hochgebogenen Rand dem der Glasplatte untergelegten Grundrahmen aufgesteckt und arretiert werden kann.

## Patentansprüche

1. Dichtungsanordnung für den Spalt zwischen dem starren Deckel (2) eines Fahrzeugdachs und der Dachöffnung (1), bei der der Deckel aus einer Glasplatte (2) mit einem im Randbereich untergelegten und seitlich überstehenden Grundrahmen (10) mit einem hochgebogenen Rand (12) verklebt ist und zwischen Glasplattenumfang und Dachöffnung (1) eine Spaltdichtung (3) mit einem U-förmigen Klemmbereich (13; 50) aus Elastomer auf dem überstehenden Rand (12) aufgeklemmt ist, wobei die Spaltdichtung (3) einen den Rand der Glasplatte (2) übergreifenden lippenförmigen Ansatz (15) und ein auf der anderen Seite anextrudiertes Hohlkammerprofil (20; 56) aus Moosgummi aufweist, dadurch gekennzeichnet, daß die Spaltdichtung (3) mit einer gegen den umlaufenden Rand der Glasplatte (2) gerichteten Dichtlippe (17; 53) und einer Armierung (14) in dem Klemmbereich (13; 50) versehen ist.

2. Dichtungsanordnung nach Anspruch 1, dadurch gekennzeichnet, daß die die Glasplatte (2) und den Grundrahmen (10) geschlossen umziehende Spaltdichtung (3) aus einem sich über die Vorderkante des Deckels (2) erstreckenden Profilabschnitt (A) mit einer seitlich vom Moosgummiprofil (20; 56) zur Dachöffnung abragenden Dichtlippe (22; 57) und einem sich über die übrigen Umfangsbereiche des Deckels (2) erstreckenden Profilabschnitt (B) mit einem von an das Moosgummiprofil (20; 56) angrenzenden Schenkel des U-förmigen Klemmbereiches (13; 50) senkrecht abragenden Dichtsteg (25; 51) besteht, und daß die beiden Profilabschnitte (A, B) an ihren Stoßstellen (4, 5) zu einem einstückigen Spaltdichtungs-Rahmen (3) dauerhaft verbunden sind.

3. Dichtungsanordnung nach Anspruch 1, dadurch gekennzeichnet, daß der Elastomerteil der Spaltdichtung (3) aus EPDM mit einer Shore-A-Härte von etwa 70 besteht.

4. Dichtungsanordnung nach Anspruch 1, dadurch gekennzeichnet, daß die Armierung des U-förmigen Klemmbereiches (13; 50) aus einem einvulkanisierten Stanzband (14) mit randseitigen Einschnitten besteht.

5. Dichtungsanordnung nach Anspruch 1, dadurch gekennzeichnet, daß der lippenförmige Ansatz (15) eine sich bis oberhalb der U-förmigen Armierung (14) erstreckende Versteifung (16) in Form eines Aluminiumbandes oder Stanzbandes aufweist.

6. Dichtungsanordnung nach Anspruch 1, dadurch gekennzeichnet, daß der U-förmige Klemmbereich (13) an seinem glasplattenseitigen Schenkel einen horizontalen, zur Glasplatte (2) hin gerichteten Ansatz (18) aufweist, in den sich ein abgewinkeltes Ende (19) der Armierung (14) erstreckt.

7. Dichtungsanordnung nach Anspruch 6, dadurch gekennzeichnet, daß Glasplatte (2) und Grundrahmen (10) mittels einer Kleberschicht (11) derart verbunden sind, daß auch das freie Ende des Ansatzes (18) mit in die Kleberschicht (11) eingebettet ist.

8. Dichtungsanordnung nach Anspruch 1, dadurch gekennzeichnet, daß die gegen den Rand der Glasplatte (2) gerichtete Dichtlippe als dreieckförmige Dichthohlkammer (53) mit einer Eindrückkerbe (54) im horizontalen Schenkel ausgebildet ist.

9. Dichtungsanordnung nach Anspruch 1, dadurch gekennzeichnet, daß der U-förmige Klemmbereich (13) auf seiner Innenseite mehrere, schräg abragende Klemmlippen (30) aufweist.

10. Dichtungsanordnung nach Anspruch 1, dadurch gekennzeichnet, daß zur Arretierung des U-förmigen Klemmbereiches (13) auf den hochgebogenen Rand (12) des Grundrahmens (10) U-förmige Klammern (31, 35) mit nach außen abgebogenen Schenkelenden (32, 36) vorgesehen sind, welche Schenkelenden (32, 36) in entsprechende Ausnehmungen (33, 37) des U-förmigen Klemmbereiches (13) ragen.

11. Dichtungsanordnung nach Anspruch 1, dadurch gekennzeichnet, daß zur Arretierung des U-förmigen Klemmbereiches (13) der hochgebogene Steg (12) eine seitliche Auswölbung (40) aufweist, die auf der einen Seite in eine entsprechende Ausnehmung (41) des einen U-Schenkels (13) eingreift und dessen anderer U-Schenkel eine gleichartige Auswölbung (42) aufweist, die in die durch die Auswölbung (40) entstehende rückseitige Ausnehmung des Randes (12) eingreift.

12. Dichtungsanordnung nach Anspruch 1, dadurch gekennzeichnet, daß der U-förmige Klemmbereich (50) mittels eines aktivierbaren Klebers (55) mit dem hochgebogenen Rand (12) verbindbar ist.

13. Dichtungsanordnung nach Anspruch 12, dadurch gekennzeichnet, daß die aktivierbare Kleberschicht (55) eine innenliegende, stromdurchflossene Kupferlitze (56) zur Aktivierung des Klebers (55) aufweist.

14. Dichtungsanordnung nach Anspruch 12 und 13, dadurch gekennzeichnet, daß die aktivierbare Klebermasse (55) auf eine Innenseite des U-förmigen Klemmbereiches (50) aufgebracht, insbesondere anextrudiert und nach Aufschieben des Klemmbereiches (50) auf den hochgebogenen Rand (12) angepreßt und aktiviert ist.

## Claims

1. A sealing arrangement for the gap between the rigid cover (2) of a vehicle roof and the roof opening (1) in which the cover is a plate of glass (2) bonded to a baseframe (10) having a rim portion underlay and protruding at the side with an upswept rim (12), with a weatherstrip (3) having an elastomeric U-shaped clamping portion (13;50) clamp-mounted on the protruding rim (12) between the periphery of said glass plate (2) and said roof opening (1), said weatherstrip (3) comprising a lipped appendage (15) clasping the edge of said glass plate (2) and a sponge rubber hollow chamber profile (20; 56) coextruded to the other side, characterized in that said weatherstrip (3) is provided with a sealing lip (17; 53) facing the peripheral edge of said glass plate (2) and with a strengthening element (14) in said clamping portion (13;50).

2. The sealing arrangement as set forth in claim 1, characterized in that said weatherstrip (3) enclosing said glass plate (2) and said baseframe (10) comprises a profile section (A) extending beyond the front edge of said cover (2) including a side sealing lip (22; 57) protruding laterally from said sponge rubber profile (20; 56) to the roof opening (1) and a profile section (B) extending over the remaining peripheral portions of said cover (2) with a sealing web (25;51) protruding perpendicularly from one leg of said U-shaped clamping portion (13;50) adjoining said sponge rubber profile (20; 56) and that both profile sections (A, B) are durably butt-jointed to form a one-piece weatherstrip frame (3).

3. The sealing arrangement as set forth in claim 1, characterized in that said elastomeric part of said weatherstrip (3) consists of EPDM having a Shore A hardness of approx. 70.

4. The sealing arrangement as set forth in claim 1, characterized in that said strengthening element of said U-shaped clamping portion (13;50) consists of a stamped strip (14) vulcanized in place with slotted openings in the edges.

5. The sealing arrangement as set forth in claim 1, characterized in that said lipped appendage (15) comprises a stiffener element (16) in the form of a strip of aluminum or stamped strip extending up to above said U-shaped strengthening element (14).

6. The sealing arrangement as set forth in claim 1, characterized in that said U-shaped clamping portion (13;50) comprises at its leg on the side of said glass plate (2) a horizontal appendage (18) facing said glass plate (2) into which one downswept end (19) of said strengthening element (14) extends.

7. The sealing arrangement as set forth in claim 6, characterized in that said glass plate (2) and said baseframe (10) are joined by means of an adhesive layer (11) such that also the free end of said appendage (18) is embedded in said adhesive layer (11).

8. The sealing arrangement as set forth in claim 1, characterized in that said sealing lip facing said edge of said glass plate (2) is configured as a triangular sealing hollow chamber (53) including an impression notch (54) in its horizontal leg.

9. The sealing arrangement as set forth in claim 1, characterized in that said U-shaped clamping portion (13) comprises on its inner side several, downswept inclined protruding clamping lips (30).

10. The sealing arrangement as set forth in claim 1, characterized in that for fixing said U-shaped clamping portion (13) to said upswept rim (12) of said baseframe (10) U-shaped clips (31, 35) having outwardly downswept leg ends (32, 36) are provided, said leg ends (32, 36) protruding into corresponding recesses (33, 37) of said U-shaped clamping portion (13).

11. The sealing arrangement as set forth in claim 1, characterized in that for fixing said U-shaped clamping portion (13) said upswept rim (12) comprises a side bulge (40) engaging on the one side a corresponding recess (41) in one U leg (13) and the other U leg of which comprises an identical bulge (42) engaging the rear side recess of said rim (12) produced by said bulge (40).

12. The sealing arrangement as set forth in claim 1, characterized in that said U-shaped clamping portion (50) is joinable to said upswept rim (12) by means of an activatable adhesive (55).

13. The sealing arrangement as set forth in claim 12, characterized in that said activatable adhesive layer (55) comprises an internal live copper strand (56) for activating said adhesive (55).

14. The sealing arrangement as set forth in claim 12 and 13, characterized in that said activatable adhesive compound (55) is applied to one inner side of said U-shaped clamping portion (50), more particularly coextruded thereto, and urged against said upswept rim (12) and activated after said clamping portion (50) is mounted in place.

## Revendications

1. Disposition d'étanchéité pour l'intervalle entre le couvercle rigide (2) d'un toit de véhicule et l'ouverture de toit (1), dans laquelle le couvercle constitué par une plaque de verte (2) est collé avec un cadre de base (10) disposé au-dessous dans la zone marginale et dépassant latéralement avec une bordure (12) recourbée vers le haut, et dans laquelle un joint d'étanchement (3) présentant une zone de serrage en forme de U (13 ; 50) en élastomère est serré sur la bordure en dépassement (12), entre la périphérie de la plaque de verte et l'ouverture de toit (1), le joint (3) comportant un talon (15) en forme de lèvre coiffant le bord de la plaque de verte (2) et un profilé à chambre creuse (20 ; 56) en caoutchouc mousse extrudé sur l'autre côté, caractérisée en ce que le joint (3) est pourvu d'une lèvre d'étanchement (17 ; 53) dirigée contre le bord périphérique de la plaque de verte (2) et d'une armature (14) dans la zone de serrage (13 ; 50).

2. Disposition d'étanchéité selon la revendication 1, caractérisée en ce que le joint fermé (3) entourant la plaque de verre (2) et le cadre de base (10) est constitué par un tronçon de profilé (A) qui s'étend sur l'arête avant du couvercle (2) et qui comporte une lèvre d'étanchement (22 ; 57) latéralement en saillie depuis le profilé en caoutchouc mousse (20 ; 56) vers l'ouverture de toit, et par un tronçon de profilé (B) qui s'étend sur les zones périphériques restantes du couvercle (2) et qui comporte une barrette d'étanchement (25 ; 51) verticalement en saillie depuis le côté de la zone de serrage en forme de U (13 ; 50) adjacent au profilé en caoutchouc mousse (20 ; 56), et en ce que les deux tronçons de profilé (A, B) sont durablement reliés au niveau de leurs emplacements de jointure (4, 5) pour former un cadre d'étanchement (3) d'une seule pièce.

3. Disposition d'étanchéité selon la revendication 1, caractérisée en ce que la partie en élastomère du joint (3) est constituée en EPDM d'une dureté Shore A d'environ 70.

4. Disposition d'étanchéité selon la revendication 1, caractérisée en ce que l'armature de la zone de serrage en forme de U (13 ; 50) est constituée par une bande poinçonnée (14) vulcanisée dans celle-ci et comportant des entailles marginales.

5. Disposition d'étanchéité selon la revendication 1, caractérisée en ce que le talon en forme de lèvre (15) présente une rigidification (16) sous forme d'une bande en aluminium ou d'une bande poinçonnée qui s'étend jusqu'au-dessus de l'armature en forme de U (14).

6. Disposition d'étanchéité selon la revendication 1, caractérisée en ce que la zone de serrage en forme de U (13) comporte, sur son côté dirigé vers la plaque de verte, un talon horizontal (18) orienté vers la plaque de verte (2) dans lequel s'étend une extrémité coudée (19) de l'armature (14).

7. Disposition d'étanchéité selon la revendication 6, caractérisée en ce que la plaque de verte (2) et le cadre de base (10) sont reliés au moyen d'une couche de colle (11), de telle sorte que l'extrémité libre du talon (18) est également noyée dans la couche de colle (11).

8. Disposition d'étanchéité selon la revendication 1, caractérisée en ce que la lèvre d'étanchement dirigée contre le bord de la plaque de verte (2) est réalisée sous forme d'une chambre creuse d'étanchement triangulaire (53) présentant une entaille en renfoncement (54) dans le côté horizontal.

9. Disposition d'étanchéité selon la revendication 1, caractérisée en ce que la zone de serrage en forme de U (13) comporte sur sa face intérieure plusieurs lèvres de serrage (30) en saillie en oblique.

10. Disposition d'étanchéité selon la revendication 1, caractérisée en ce que pour arrêter la zone de serrage en forme de U (13) sur la bordure recourbée vers le haut (12) du cadre de base (10), il est prévu des pinces en forme de U (31, 35) comportant des extrémités de bras repliées vers l'extérieur (32, 36), lesdites extrémités de bras (32, 36) pénétrant dans des évidements correspondants (33, 37) de la zone de serrage en forme de U (13).

11. Disposition d'étanchéité selon la revendication 1, caractérisée en ce que pour arrêter la zone de serrage en forme de U (13), la barrette repliée vers le haut (12) présente un bombement latéral (40) qui s'engage sur un côté dans un évidement correspond (41) de l'un des bras en U (13), et dont l'autre bras en U présente un bombement analogue (42) qui s'engage dans l'évidement arrière de la bordure (12), résultant du bombement (40).

12. Disposition d'étanchéité selon la revendication 1, caractérisée en ce que la zone de serrage en forme de U (50) peut être reliée à la bordure repliée vers le haut (12) au moyen d'une colle susceptible d'être activée (55).

13. Disposition d'étanchéité selon la revendication 12, caractérisée en ce que la couche de colle susceptible d'être activée (55) présente un fil de cuivre (56) situé à l'intérieur et traversé par un courant pour activer la colle (55).

14. Disposition d'étanchéité selon les revendications 12 et 13, caractérisée en ce que la masse de colle susceptible d'être activée (55) est agencée, en particulier extrudée, sur une face intérieure de la zone de serrage en forme de U (50), et en ce qu'elle est pressée et activée sur la bordure repliée vers le haut (12), après coiffage de la zone de serrage (50).
